# EUROPÄISCHE PATENTSCHRIFT

(11) **EP 0 806 327 B1**
(45) Veröffentlichungstag und Bekanntmachung des Hinweises auf die Patenterteilung: **14.03.2001**
(21) Anmeldenummer: 97107085.9
(22) Anmeldetag: 29.04.1997
(51) Int. Cl.: B60R 22/46

(54) **Linearantrieb für ein Fahrzeuginsassen-Rückhaltesystem**
Linear drive for a vehicle occupant restraint system
Dispositif d'entraînement linéaire pour un système de retenue des occupants d'un véhicule

(30) Priorität: 06.05.1996 DE 29608210 U
(43) Veröffentlichungstag der Anmeldung: 12.11.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- DE-A- 2 349 891
- US-A- 4 237 690
- US-A- 4 288 098

## Beschreibung

Die Erfindung betrifft einen Linearantrieb für ein Fahrzeuginsassen-Rückhaltesystem, mit einem Zylinder, einem in diesem verschiebbaren Kolben, der aus einem mit einem konischen Außenabschnitt versehenen Sperrteil und einem zu dem Sperrteil koaxialen Dichtteil besteht, mit mehreren Sperrkörpern, die zwischen dem konischen Außenabschnitt des Sperrteils und der Innenwandung des Zylinders verschiebbar angeordnet sind, und mit einem an den Kolben mittels eines Halteabschnittes angeschlossenen Zugelement ,wobei das Sperrteil an seinem dem Dichtteil zugewandten axialen Ende des konischen Außenabschnittes mit einer Umfangsnut versehen ist.

Ein solcher Linearantrieb dient dazu, die Energie eines unter hohem Druck stehenden Gases in einen Straffhub umzusetzen, der zum Beseitigen der Gurtlose eines Sicherheitsgurtsystems verwendet werden kann, indem beispielsweise die Gurtspule eines Gurtaufrollers in der Aufwickelrichtung gedreht wird oder indem ein Gurtschloß für den Sicherheitsgurt geeignet verlagert wird.

In der US-A-4 237 690 wird ein Linearstraffer gemäß dem Oberbegriff des Anspruchs 1 beschrieben, dessen Kolben aus zwei Teilen besteht. Das vom Zugmittel abgewandte Teil entfernt sich nach der Straffbewegung aufgrund seiner Trägheit vom restlichen Kolben und bringt dabei Sperrkörper in eine sperrende Stellung.

Die US-A-4 288 098 zeigt einen Linearstraffer, bei dem die Sperrkörper nach der Straffbewegung durch das Abreißen eines Halteteils freigegeben werden, um in eine sperrende Stellung zu gelangen, wenn der Kolben entgegen der Straffrichtung belastet wird.

Die Aufgabe der Erfindung ist es einen Linearantrieb zu schaffen, der sich durch eine besonders kurze Baulänge und durch eine besonders einfache Montierbarkeit auszeichnet.

Zur Lösung dieser Aufgabe ist gemäß des Kennzeichens des Anspruchs 1 vorgesehen, daß das Dichtteil zwischen einer Montagestellung, in der die Sperrkörper in der Umfangsnut liegen und nicht an der Innenwandung des Zylinders angreifen, und einer Funktionsstellung, in der die Sperrkörper an der Innenwandung des Zylinders anliegen, bewegbar ist. Durch diese Gestaltung sind zwei Anordnungen der Sperrkörper relativ zu dem Sperrteil möglich: In der Montagestellung ist der Kolben in beiden Richtungen entlang der Längsachse des Zylinders verschiebbar; dies ist insbesondere bei der Montage vorteilhaft. Dagegen ist in der Funktionsstellung der Kolben nur in einer Richtung im Inneren des Zylinders bewegbar.

Vorzugsweise ist vorgesehen, daß das Dichtteil an seinem dem konischen Außenabschnitt zugewandten axialen Ende mit einer Stützlippe für die Sperrkörper versehen ist und daß entweder an dem Sperrteil oder an dem Halteabschnitt eine zylindrische Außenfläche gebildet ist, auf der das Dichtteil zwischen der von dem konischen Außenabschnitt in axialer Richtung beabstandeten Montagestellung und der an den konischen Abschnitt angenäherten Funktionsstellung bewegbar ist. Durch diese Gestaltung kann der Kolben in besonders einfacher Weise aus der Montagestellung in die Funktionsstellung überführt werden. Wenn sich das Dichtteil in der Montagestellung befindet, werden die Sperrkörper von der Stützlippe des Dichtteils sicher in der Umfangsnut gehalten. Wenn das Dichtteil aus der Montagestellung in die Funktionsstellung bewegt wird, drückt die Stützlippe die Sperrkörper aus der Umfangsnut heraus auf den konischen Abschnitt bis in eine Stellung, in der sie die Innenwandung des Zylinders berühren. Der Linearantrieb ist nun funktionsbereit.

Gemäß einer weiteren Ausführungsform der Erfindung ist vorgesehen, daß das Sperrteil auf den Halteabschnitt aufgeschoben ist, so daß der Halteabschnitt im Inneren des Sperrteils liegt. Dies führt zu einer besonders geringen Baulänge des Linearantriebs, da das Zugelement innerhalb der Baulänge mit dem Kolben verbunden ist, die ohnehin für den Kolben benötigt wird.

Vorzugsweise ist vorgesehen, daß der Halteabschnitt einen kegeligen Abschnitt aufweist. Dies führt zu einer besonders gleichmäßigen Kraftübertragung zwischen dem Kolben und dem Zugelement und somit zu einer besonders hohen Festigkeit der Verbindung zwischen dem Kolben und dem Zugelement.

Gemäß einer bevorzugten Ausführungsform ist vorgesehen, daß das Sperrteil ein Kaltfließpressteil ist. Auf diese Weise kann das Sperrteil besonders günstig hergestellt werden, beispielsweise ausgehend von einem hohlzylindrischen Rohrabschnitt, und die beim Kaltfließpressen auftretende Kaltverfestigung des Sperrteils führt zu einer besonders hohen Festigkeit des Sperrteils. Dieses kann dann aus einem nicht-vergüteten Metall bestehen.

Einzelheiten der Erfindung ergeben sich aus den Unteransprüchen.

Die Erfindung wird nachfolgend unter Bezugnahme auf die beigefügte Zeichnung beschrieben. In dieser zeigen:
- Fig. 1 einen schematischen, abgebrochenen Querschnitt durch einen erfindungsgemäßen Linearantrieb gemäß einer ersten Ausführungsform in einer Funktionsstellung;
- Fig. 2 den Linearantrieb von Fig. 1 in einer Montagestellung;
- Fig. 3 einen erfindungsgemäßen Linearantriebs gemäß einer weiteren Variante des Linearantriebs der Figuren 1 und 2 in einer Montagestellung;
- Fig. 4 einen erfindungsgemäßen Linearantrieb gemäß einer weiteren Variante des Linearantriebs der Figuren 1 und 2 in einer Funktionsstellung;
- Fig. 5 eine zweite Ausführungsform eines erfindungsgemäßen Linearantriebs; und
- Fig. 6 eine dritte Ausführungsform eines erfindungsgemäßen Linearantriebs.

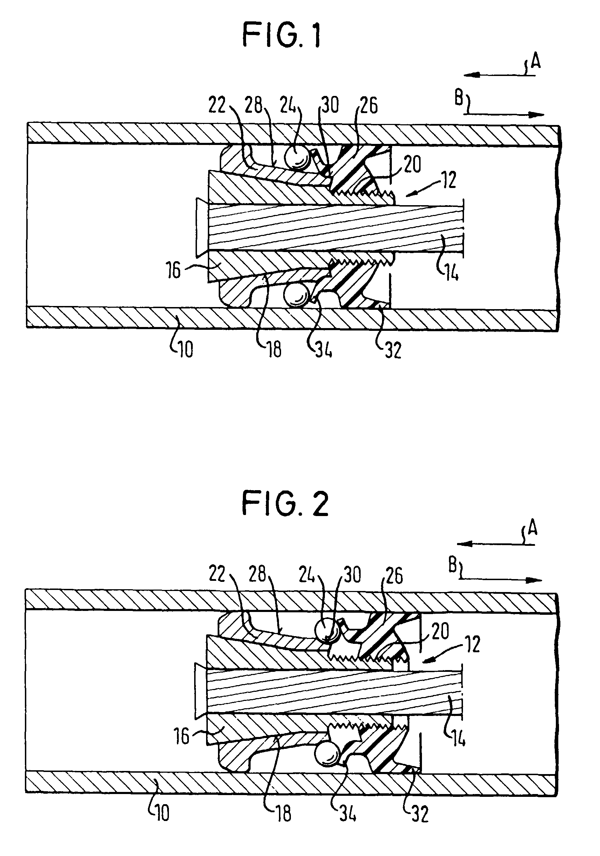

In den Figuren 1 und 2 ist eine erste Ausführungsform eines erfindungsgemäßen Linearantriebs dargestellt. Der Linearantrieb besteht im wesentlichen aus einem Zylinder 10, in dessen Innerem ein Kolben 12 verschiebbar angeordnet ist, der mit einem Zugelement 14 verbunden ist. Bei Aktivierung des Linearantriebs wird die bezüglich der Figuren 1 und 2 rechte Seite des Kolbens mit unter Druck stehendem Gas beaufschlagt, so daß sich der Kolben 12 in Richtung des Pfeils A bewegt. Diese auf das Zugelement 14 übertragene Bewegung kann dazu verwendet werden, die Gurtlose aus einem Sicherheitsgurtsystem zu beseitigen, indem beispielsweise die Gurtspule des Gurtaufrollers in der Aufwickelrichtung gedreht wird oder indem ein Beschlagteil des Sicherheitsgurtsystems in geeigneter Richtung relativ zu anderen Teilen bewegt wird.

Bei der in den Figuren 1 und 2 dargestellten Ausführungsform ist das Zugelement 14 als Zugseil ausgeführt, an dessen dem Kolben 12 zugeordneten Ende ein Halteelement für den Kolben 12 vorgesehen ist, das bei der dargestellten Ausführungsform als mit dem Zugseil verpreßtes Formteil 16 ausgeführt ist. Das Formteil 16 weist einen kegeligen Abschnitt 18 und einen Fortsatz mit zylindrischer Außenfläche 20 auf. Auf der zylindrischen Außenfläche ist ein Gewinde gebildet.

Der Kolben 12 besteht aus einem Sperrteil 22, mehreren Sperrkörpern 24 und einem Dichtteil 26. Die Sperrkörper 24 sind bei der gezeigten Ausführungsform als Kugeln ausgebildet, die auf einem konischem Außenabschnitt 28 des Sperrteils 22 zwischen einer in Fig. 1 dargestellten Ausgangslage und einer Sperrstellung bewegbar sind, in der sie zwischen dem Sperrteil 22 und der Innenwandung des Zylinders 10 verkeilt sind und eine Bewegung des Kolbens 12 in Richtung des Pfeiles B verhindern oder energiewandelnd hemmen. An seinem dem Dichtteil zugewandten axialen Ende ist das Sperrteil 22 mit einer Umfangsnut 30 versehen.

Das Dichtteil 26 weist eine an der Innenwandung des Zylinders 10 anliegende Dichtlippe 32 sowie eine Stützlippe 34 auf. Das Dichtteil 26 ist auf dem Fortsatz 20 zwischen einer in Fig. 2 dargestellten Montagestellung und einer in Fig. 1 dargestellten Funktionsstellung verschraubbar. In der Montagestellung hält die Stützlippe 34 die Sperrkörper 24 in der Umfangsnut 30, so daß die Sperrkörper 24 nicht an der Innenwandung des Zylinders 10 angreifen. In diesem Zustand ist der Kolben 10 sowohl in Richtung des Pfeils A als auch in Richtung des Pfeils B in dem Zylinder bewegbar, was einen großen Vorteil hinsichtlich der freien Montierbarkeit des Linearantriebs darstellt. Wenn das Dichtteil 26 aus der Montagestellung in Richtung der Funktionsstellung verschraubt wird, werden die Sperrkörper 24 von der Stützlippe 34 aus der Umfangsnut 30 herausgedrückt und auf den konischen Außenabschnitt 28 des Sperrteils 22 gedrückt, bis sie an der Innenwandung des Zylinders 10 anliegen. Nun ist der Linearantrieb funktionsbereit: Wenn der Kolben 12 mit unter Druck stehendem Gas beaufschlagt wird, kann er sich unbeeinträchtigt von den Sperrkörpern 24 in Richtung des Pfeils A bewegen; einer Bewegung des Kolbens 12 in Richtung des Pfeils B dagegen wirken die Sperrkörper 24 entgegen. Beim Überführen des Dichtteils 26 aus der Montagestellung in die Funktionsstellung kommt es zu einer Verformung der Stützlippe 34, aufgrund derer die in der Montagestellung des Dichtteils 26 sicher in der Umfangsnut 30 gehaltenen Sperrkörper über den Absatz zwischen der Umfangsnut 30 und dem konischen Außenabschnitt 28 hinübergedrückt werden.

Durch die erfindungsgemäße Gestaltung des Linearantriebs ergeben sich eine Reihe von Vorteilen. Da die Sperrkörper 24 in einer von der Innenwandung des Zylinders 10 beabstandeten Montagestellung gehalten werden können, ergibt sich eine große Freiheit bei der Montage des Linearantriebs, da in der Montagestellung der Kolben 12 sowohl in Richtung des Pfeils A als auch in Richtung des Pfeils B in dem Zylinder bewegt werden kann, was einen wesentlichen Vorteil gegenüber Linearantrieben gemäß dem Stand der Technik darstellt, bei denen der Kolben nur in einer Richtung in dem Zylinder bewegt werden kann, nämlich in Richtung des Pfeils A. Durch die ineinandergeschachtelte Bauweise, also der Anordnung des gesamten Kolbens auf dem Halteabschnitt des Zugseils, ergibt sich eine besonders kurze Baulänge. Durch eine an die Anforderungen angepaßte Materialauswahl für den Kolben 12 ergibt sich insgesamt ein geringes Gewicht. Das Dichtteil 26, das keinen großen Flächenpressungen ausgesetzt ist, kann aus einem Kunststoff bestehen, während das hohen punktuellen Belastungen ausgesetzte Sperrteil 22 aus Metall besteht. Mittels des kegeligen Abschnittes 18 ergibt sich bei zwischen dem Zugseil 14 und dem Kolben 12 wirkenden hohen Kräften eine Spannwirkung auf das Formteil 16, das daher vergleichsweise leicht dimensioniert werden kann. Es ist sogar möglich, ein Formteil 16 aus Aluminium zu verwenden. Weiterhin kann aufgrund der günstigen Kraftübertragung zwischen dem Kolben und dem Zugseil 14 ein leicht dimensioniertes Sperrteil 22 verwendet werden. Durch die günstige Gestaltung des Sperrteils 16 ohne Hinterschneidungen ist es außerdem möglich, dieses als Kaltfließpreßteil herzustellen. Die beim Kaltfließpressen auftretende Kaltverfestigung des Materials erhöht die Festigkeit des Sperrteils 22 zusätzlich. Daher ist es möglich, ein Sperrteil aus nicht-vergütetem Metall zu verwenden.

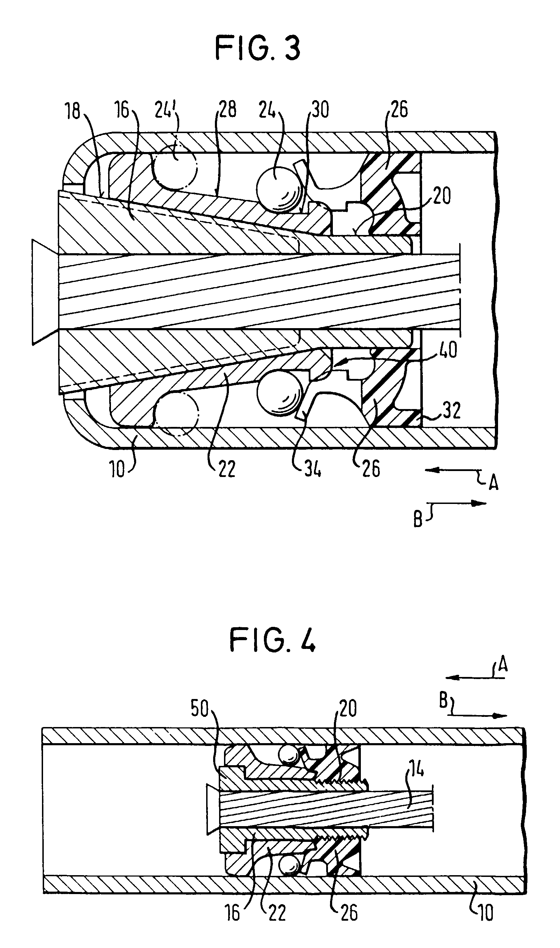

In Fig. 3 ist eine Variante zu der in den Figuren 1 und 2 dargestellten Ausführungsform eines erfindungsgemäßen Linearantriebs dargestellt. Für aus den Figuren 1 und 2 bekannte Elemente werden dieselben Bezugszeichen verwendet, und hinsichtlich der Funktion dieser Elemente wird auf die Erläuterungen zu den Figuren 1 und 2 verwiesen.

Der Unterschied zwischen der in Fig. 3 dargestellten Variante und der in den Figuren 1 und 2 dargestellten Ausführungsform besteht darin, daß bei dem Linearantrieb aus Fig. 3 die zylindrische Außenfläche 20 des Fortsatzes des Formteils 16 glatt, also ohne Gewinde, ausgeführt ist und daß eine Schnappverbindung 40 vorgesehen ist, mit der das Dichtteil 26 in der Funktionsstellung an dem Sperrteil 22 festlegbar ist. Das Dichtteil 26 ist mit einem Preßsitz auf der zylindrischen Außenfläche 20 des Fortsatzes angeordnet, so daß es sicher in der in Fig. 3 dargestellten Montagestellung gehalten ist. Zum Überführen des Dichtteils 26 aus der Montagestellung in die Funktionsstellung muß das Dichtteil 26 lediglich in Richtung des konischen Außenabschnittes 28 geschoben werden, bis die Schnappverbindung 40 einrastet. Die während des Einrastens der Schnappverbindung 40 erfolgende Aufspreizung der Stützlippe 34 erleichtert das Überführen der Sperrkörper 24 aus der Umfangsnut 30 heraus auf den konischen Außenabschnitt 28. In Fig. 3 sind schließlich Sperrkörper 24' dargestellt, die sich in einer Stellung befinden, in der sie einer Bewegung des Kolbens 12 in Richtung des Pfeils B entgegenwirken.

Die mit dieser Variante erzielbaren Vorteile entsprechen im wesentlichen denjenigen der Ausführungsform gemäß den Figuren 1 und 2. Weiterhin läßt sich das Dichtteil 26 besonders einfach aus der Montagestellung in die Funktionsstellung überführen, indem beispielsweise der Kolben mittels des Zugelementes 14 bezüglich Fig. 3 nach rechts bis an das entsprechende stirnseitige Ende des Zylinders 10 gezogen wird, so daß das Sperrteil 22 in das Dichtteil 26 hineingedrückt wird. Dies ist bei Linearantrieben aus dem Stand der Technik unmöglich, da die Sperrkörper 24 einer solchen Bewegung des Kolbens 12 entgegenwirken.

In Fig. 4 ist eine weitere Variante der in den Figuren 1 und 2 dargestellten Ausführungsform eines erfindungsgemäßen Linearantriebs dargestellt. Der Unterschied zur Ausführungsform gemäß den Figuren 1 und 2 besteht darin, daß der Halteabschnitt 16 einen flanschartigen Endabschnitt 50 aufweist, der in einer komplementären Aussparung im Inneren des Sperrteils 22 aufgenommen ist. Bei dieser Variante erfolgt die Kraftübertragung zwischen dem Kolben 12 und dem Zugseil 14 durch die senkrecht zur Kraftübertragungsrichtung ausgerichtete Anlagefläche zwischen dem Endabschnitt 50 und dem Sperrteil 22. Dadurch werden Kraftkomponenten vermieden, welche das Sperrteil 22 aufzuweiten suchen.

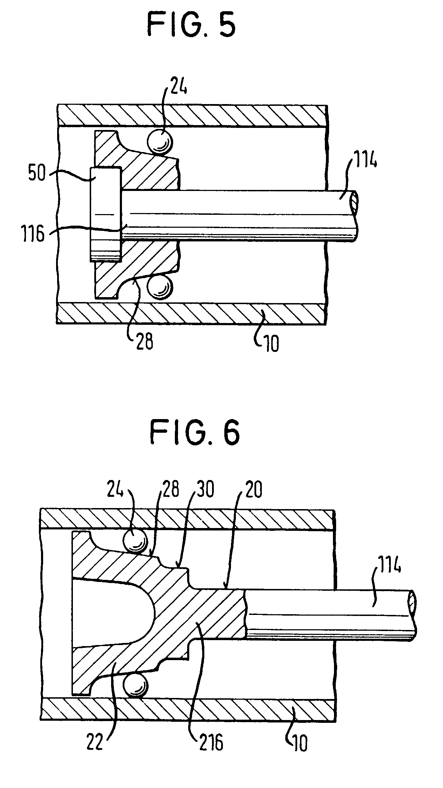

In Fig. 5 ist schematisch eine zweite Ausführungsform eines erfindungsgemäßen Linearantriebs dargestellt. Der Unterschied zur Ausführungsform gemäß den Figuren 1 und 2 besteht darin, daß das Zugelement als massiver Zugstab 114 ausgeführt ist, an dessen einem Ende einstückig der Halteabschnitt 116 angeformt ist. Die Verwendung eines massiven Zugstabes anstelle eines Zugseils ist dann möglich und vorteilhaft, wenn die Bewegung des Kolbens 12 ohne Umlenkung übertragen werden kann. Durch die hohe Festigkeit eines Zugstabes ergibt sich ein insgesamt geringes Gewicht.

In Fig. 6 ist eine dritte Ausführungsform eines erfindungsgemäßen Linearantriebs dargestellt. Auch bei dieser Ausführungsform wird als Zugelement ein massiver Zugstab 114 verwendet, dessen Halteabschnitt 216 einstückig mit dem Sperrteil 22 des Kolbens 12 verbunden ist. Durch den direkten Kraftfluß zwischen dem Kolben 12 und der Zugstange 114 ergibt sich ein besonders geringes Gewicht. Weiterhin kann eine bei der Herstellung des Zugstabes zusammen mit dem Sperrteil auftretende Kaltverfestigung des Materials vorteilhaft genutzt werden.

## Patentansprüche

1. Linearantrieb für ein Fahrzeuginsassen-Rückhaltesystem, mit einem Zylinder (10), einem in diesem verschiebbaren Kolben (12), der aus einem mit einem konischen Außenabschnitt (28) versehenen Sperrteil (22) und einem zu dem Sperrteil (22) koaxialen Dichtteil (26) besteht, mit mehreren Sperrkörpern (24), die zwischen dem konischen Außenabschnitt (28) des Sperrteils (22) und der Innenwandung des Zylinders (10) verschiebbar angeordnet sind, und mit einem an den Kolben (12) mittels eines Halteabschnittes (16; 116; 216) angeschlossenen Zugelement (14; 114), wobei das Sperrteil (22) an seinem dem Dichtteil (26) zugewandten axialen Ende des konischen Außenabschnittes (28) mit einer Umfangsnut (30) versehen ist, dadurch gekennzeichnet, daß das Dichtteil (26) zwischen einer Montagestellung, in der die Sperrkörper (24) in der Umfangsnut (30) liegen und nicht an der Innenwandung des Zylinders (10) angreifen, und einer Funktionsstellung, in der die Sperrkörper (24) an der Innenwandung des Zylinders (10) anliegen, bewegbar ist.

2. Linearantrieb nach Anspruch 1, dadurch gekennzeichnet, daß das Dichtteil (26) an seinem dem konischen Außenabschnitt (28) zugewandten axialen Ende mit einer Stützlippe (34) für die Sperrkörper (24) versehen ist und daß der Halteabschnitt (16) an seinem dem Dichtteil (26) zugewandten axialen Ende mit einem Fortsatz mit zylindrischer Außenfläche (20) versehen ist, auf der das Dichtteil (26) zwischen der von dem konischen Außenabschnitt (28) in axialer Richtung beabstandeten Montagestellung und der an den konischen Abschnitt (28) angenäherten Funktionsstellung bewegbar ist.

3. Linearantrieb nach Anspruch 1, dadurch gekennzeichnet, daß der Halteabschnitt (16) mit einer zylindrischen Außenfläche (20) versehen ist, auf der das Dichtteil (26) zwischen der von dem konischen Außenabschnitt (28) in axialer Richtung beabstandeten Montagestellung und der an den konischen Außenabschnitt (28) angenäherten Funktionsstellung bewegbar ist.

4. Linearantrieb nach einem der Ansprüche 2 und 3, dadurch gekennzeichnet, daß die zylindrische Außenfläche (20) des Halteabschnittes mit einem Gewinde versehen ist, auf dem das Dichtteil (26) verschraubbar ist.

5. Linearantrieb nach einem der Ansprüche 2 und 3, dadurch gekennzeichnet, daß das Dichtteil (26) mit einem Preßsitz auf der zylindrischen Außenfläche (20) des Halteabschnittes angeordnet ist.

6. Linearantrieb nach Anspruch 5, dadurch gekennzeichnet, daß eine Schnappverbindung (40) zwischen dem Dichtteil (26) und dem Sperrteil (22) vorgesehen ist, mit der das Dichtteil (26) in der Funktionsstellung an dem Sperrteil (22) festlegbar ist.

7. Linearantrieb nach einem der vorhergehenden Ansprüche, dadurch gekennzeichnet, daß das Sperrteil (22) auf den Halteabschnitt (16; 116; 216) aufgeschoben ist, so daß der Halteabschnitt im Inneren des Sperrteils liegt.

8. Linearantrieb nach Anspruch 7, dadurch gekennzeichnet, daß das Zugelement ein Zugseil (14) und der Halteabschnitt ein mit dem Zugseil verpreßtes Formteil (16) ist.

9. Linearantrieb nach Anspruch 7, dadurch gekennzeichnet, daß das Zugelement ein Zugstab (114) ist und daß der Halteabschnitt (116; 216) einstückig mit dem Zugstab (114) ausgeführt ist.

10. Linearantrieb nach einem der Ansprüche 7 bis 9, dadurch gekennzeichnet, daß der Halteabschnitt (16) einen kegeligen Abschnitt (18) aufweist.

11. Linearantrieb nach einem der Ansprüche 7 bis 9,
dadurch gekennzeichnet, daß der Halteabschnitt (16; 116; 216) einen flanschartigen Endabschnitt (50) aufweist.

12. Linearantrieb nach einem der vorhergehenden Ansprüche, dadurch gekennzeichnet, daß das Sperrteil (22) ein Kaltfließpreßteil ist.

13. Linearantrieb nach Anspruch 12, dadurch gekennzeichnet, daß das Sperrteil (22) aus nicht-vergütetem Metall besteht.

14. Linearantrieb nach Anspruch 8 und Anspruch 12,
dadurch gekennzeichnet, daß das verpreßte Formteil (16) aus Aluminium besteht.

## Claims

1. A linear actuator for a vehicle occupant restraint system, comprising a cylinder (10), a piston (12) shiftable therein and consisting of a locking part (22) provided with a conical outer section (28) and a sealing part (26) coaxial to said locking part (22), and further comprising a plurality of locking bodies (24) shiftably arranged between said conical outer section (28) of said locking part (22) and the inner wall of said cylinder (10), and a traction element (14; 114) connected to said piston (12) by means of a holding portion (16; 116; 216), said locking part (22) being provided with a peripheral groove (30) at its axial end of said conical outer section (28) facing said sealing part (26), characterized in that said sealing part (26) is movable between a fitting position in which said locking bodies (24) are held in said peripheral groove (30) and do not engage the inner wall of said cylinder (10), and an operative position in which said locking bodies (24) are in contact with the inner wall of said cylinder (10).

2. The linear actuator as set forth in claim 1, characterized in that said sealing part (26) is provided with a supporting lip (34) for said locking bodies (24) at its axial end facing said conical outer section (28) and that said holding portion (16) is provided at its axial end facing said sealing part (26) with a projection having a cylindrical outer surface (20) on which said sealing part (26) is movable between said fitting position spaced in the axial direction from said conical outer section (28) and said operative position adjacent to said conical section (28).

3. The linear actuator as set forth in claim 1, characterized in that said holding portion (16) is provided with a cylindrical outer surface (20) on which said sealing part (26) is movable between said fitting position spaced in the axial direction from said conical outer section (28) and said operative position adjacent to said conical outer section (28).

4. The linear actuator as set forth in any of the claims 2 and 3, characterized in that said cylindrical outer surface (20) of said holding portion is provided with a thread on which said sealing part (20) is screwable.

5. The linear actuator as set forth in any of the claims 2 and 3, characterized in that said sealing part (26) is arranged on said cylindrical outer surface (20) of said holding portion by a press fit.

6. The linear actuator as set forth in claim 5, characterized in that between said sealing part (26) and said locking part (22) a snap connection (40) is provided by means of which said sealing part (26) is lockable in said operative position on said locking part (22).

7. The linear actuator as set forth in any of the preceding claims, characterized in that said locking part (22) is slipped onto said holding portion (16; 116; 216), whereby said holding portion is arranged in the interior of said locking part.

8. The linear actuator as set forth in claim 7, characterized in that said traction element is a traction cable (14) and said holding portion is a shaped part (16) pressed with said traction cable.

9. The linear actuator as set forth in claim 7, characterized in that said traction element is a traction rod (114) and that said holding portion (116; 216) is integrally formed with said traction rod (114).

10. The linear actuator as set forth in any of the claims 7 to 9, characterized in that said holding portion (16) comprises a conical section (18).

11. The linear actuator as set forth in any of the claims 7 to 9, characterized in that said holding portion (16; 116; 216) comprises a flange-like end section (50).

12. The linear actuator as set forth in any of the preceding claims, characterized in that said locking part (22) is a cold extruded part.

13. The linear actuator as set forth in claim 12, characterized in that said locking part (22) is made of a non-tempered metal.

14. The linear actuator as set forth in claims 8 and 12, characterized in that said pressed shaped part (16) is made of aluminum.

## Revendications

1. Moyen d'entraînement linéaire pour un système de retenue des occupants d'un véhicule, comprenant un cylindre (10), un piston (12) qui peut y coulisser et qui est constitué d'une partie d'arrêt (22), munie d'une portion extérieure conique (28), et d'une partie d'étanchéité (26) coaxiale à la partie d'arrêt (22), comprenant plusieurs corps d'arrêt (24) disposés de manière coulissante entre la portion extérieure conique (28) de la partie d'arrêt (22) et la paroi intérieure du cylindre (10), et comprenant un élément de traction (14 ; 114) relié au piston (12) au moyen d'une portion de retenue (16 ; 116 ; 216), la partie d'arrêt étant pourvue d'une gorge périphérique (30) à son extrémité axiale tournée vers la partie d'étanchéité (26), de la portion extérieure conique (28), caractérisé en ce que la partie d'étanchéité (26) peut se déplacer entre une position de montage, dans laquelle les corps d'arrêt (24) se trouvent dans la gorge périphérique (30) et n'attaquent pas la paroi intérieure du cylindre (10), et une position de fonctionnement dans laquelle les corps d'arrêt (24) sont en appui sur la paroi intérieure du cylindre (10).

2. Moyen d'entraînement linéaire selon la revendication 1, caractérisé en ce que la partie d'étanchéité (26) comporte, à son extrémité axiale tournée vers la portion extérieure conique (28), une lèvre d'appui (34) pour les corps d'arrêt (24), et en ce que la portion de retenue (16) comporte, à son extrémité axiale tournée vers la partie d'étanchéité (26), un prolongement pourvu d'une surface extérieure cylindrique (20) sur laquelle la partie d'étanchéité (26) peut se déplacer entre une position de montage, distante de la portion extérieure conique (28) dans la direction axiale, et une position de fonctionnement rapprochée de la portion conique (28).

3. Moyen d'entraînement linéaire selon la revendication 1, caractérisé en ce que la portion de retenue (16) comporte une surface extérieure cylindrique (20) sur laquelle la partie d'étanchéité (26) peut se déplacer entre une position de montage, distante de la portion extérieure conique (28) dans la direction axiale, et une position de fonctionnement rapprochée de la portion extérieure conique (28).

4. Moyen d'entraînement linéaire selon l'une des revendications 2 et 3, caractérisé en ce que la surface extérieure cylindrique (20) de la portion de retenue est pourvue d'un filetage sur lequel la partie d'étanchéité (26) peut être vissée.

5. Moyen d'entraînement linéaire selon l'une des revendications 2 et 3, caractérisé en ce que la partie d'étanchéité (26) est disposée avec un ajustement serré sur la surface extérieure cylindrique (20) de la portion de retenue.

6. Moyen d'entraînement linéaire selon la revendication 5, caractérisé en ce qu'entre la partie d'étanchéité (26) et la partie d'arrêt (22) est prévue une liaison par encliquetage (40) permettant de bloquer la partie d'étanchéité (26) contre la partie d'arrêt (22) en position de fonctionnement.

7. Moyen d'entraînement linéaire selon l'une des revendications précédentes, caractérisé en ce que la partie d'arrêt (22) est emmanchée sur la portion de retenue (16 ; 116 ; 216), de sorte que la portion de retenue se trouve à l'intérieur de la partie d'arrêt.

8. Moyen d'entraînement linéaire selon la revendication 7, caractérisé en ce que l'élément de traction est un câble de traction (14), et la portion de retenue est une pièce moulée (16) sertie sur le câble de traction.

9. Moyen d'entraînement linéaire selon la revendication 7, caractérisé en ce que l'élément de traction est une barre de traction (114), et en ce que la portion de retenue (116 ; 216) est conçue d'un seul tenant avec la barre de traction (114).

10. Moyen d'entraînement linéaire selon l'une des revendications 7 à 9, caractérisé en ce que la portion de retenue (16) comporte une portion conique (18).

11. Moyen d'entraînement linéaire selon l'une des revendications 7 à 9, caractérisé en ce que la portion de retenue (16 ; 116 ; 216) comporte une portion terminale en forme de collerette (50).

12. Moyen d'entraînement linéaire selon l'une des revendications précédentes, caractérisé en ce que la partie d'arrêt (22) est une pièce forgée par extrusion à froid.

13. Moyen d'entraînement linéaire selon la revendication 12, caractérisé en ce que la partie d'arrêt (22) est en métal non trempé.

14. Moyen d'entraînement linéaire selon la revendication 8 et la revendication 12, caractérisé en ce que la pièce moulée sertie (16) est en aluminium.
